# EUROPEAN PATENT APPLICATION

(11) **EP 4 714 629 A1**
(43) Date of publication of application: **25.03.2026**
(21) Application number: 25201763.7
(22) Date of filing: 12.09.2025
(51) Int. Cl.: B29C 45/00, F16C 33/46

(54) **ROLLING BEARING CAGE AND METHOD FOR PRODUCING A ROLLING BEARING CAGE**

(30) Priority: 23.09.2024 DE 102024209110
(71) Applicant: Aktiebolaget SKF, 415 50 Göteborg (SE)
(72) Inventor: Weiglein, Juergen, 97714 Oerlenbach (DE); Loemba, Anselme, 97464 Niederwerrn (DE); Steblau, Dieter, 97422 Schweinfurt (DE); Cassens, Tido, 97421 Schweinfurt (DE); Galm, Thomas, 97535 Brebersdorf (DE)
(74) Representative: Kohl, Thomas

(57) **Abstract**

It is proposed that the first end face has at least one elevation (12) which differs from an individual step which has a right angle in one section.

## Description

The invention relates to a rolling bearing cage and to a method for producing the rolling bearing cage.

A rolling bearing cage having at least a first end face is known. The rolling bearing cage is made of brass. Furthermore, a rolling bearing cage which is made of PEEK with a glass fibre content is known.

It is the object of the invention in particular to achieve a high degree of efficiency. The object is achieved according to the invention by the features of Claim 1 and by the features of Claim 9, while advantageous refinements and developments of the invention can be gathered from the dependent claims.

The invention is based on a rolling bearing cage having at least a first end face.

It is proposed that the first end face has at least one elevation which differs from an individual step which has a right angle in one section. The fact that the step has a right angle "in one section" should be understood in particular to mean that there is a plane, so that an intersecting surface between the plane and the step has a contour with a right angle. This makes it possible to achieve a high degree of efficiency. In particular, the effect can be achieved that, despite a depression in a pocket-side surface of a ring segment of the rolling bearing cage, the ring segment has an approximately constant axial thickness along a circumferential direction of the rolling bearing cage, so that, during the production of the rolling bearing cage by injection moulding from a glass-fibre-reinforced plastic, a uniform flow of the glass-fibre-reinforced plastic can be achieved, as a result of which a large amount of glass fibres in the finished rolling bearing cage undergoes a favourable, in particular extended, alignment and thus contributes to a high degree of resistance of the cage.

In particular, the elevation may be at least partially in the form of a staircase.

It is advantageous that the elevation is arranged with respect to a circumferential direction of the rolling bearing cage between a centre of mass of a ring segment of the rolling bearing cage that precisely bounds a pocket of the rolling bearing cage with respect to an axial direction of the rolling bearing cage and a centre of mass of a web of the rolling bearing cage that bounds the pocket with respect to the circumferential direction. The fact that the elevation with respect to a circumferential direction of the rolling bearing cage is arranged "between" a centre of mass of a ring segment and a centre of mass of a web of the rolling bearing cage is to be understood to mean in particular that the elevation is arranged between a first half-plane and a second half-plane, wherein both half-planes are bounded by a straight line extending in the axial direction of the rolling bearing cage and by a centre of mass of the rolling bearing cage, wherein the first half-plane has the centre of mass of the ring segment and the second half-plane has the centre of mass of the web. This enables a stable formation of the rolling bearing cage and a long service life to be achieved. In particular, during production by injection moulding with a glass-fibre-reinforced plastic, an extended arrangement of a multiplicity of glass fibres can be achieved, which results in a high degree of stability. In particular, a corner region of a pocket of the rolling bearing cage that is closest to the elevation can be set back in comparison to a boundary surface of the pocket surrounding the corner region, so that, during an operating process, a rolling body moving in the pocket does not strike against the corner region and thereby disproportionately abrade the latter.

Furthermore, it is proposed that the elevation along a circumferential direction of the rolling bearing cage is free from steps that have a height, so that the height divided by a maximum axial length of extent of a ring segment of the rolling bearing cage having the elevation and extending between two axial webs of the rolling bearing cage that bound the same pocket of the rolling bearing cage is greater than 0.1724. This enables a stable construction to be achieved. In particular, during production by injection moulding with a glass-fibre-reinforced plastic, an extended arrangement of a multiplicity of glass fibres can be achieved, which results in a high degree of stability. In particular, during production by injection moulding, uniform cooling after the injection moulding can be achieved, as a result of which the formation of cracks is largely avoided.

Advantageously, the elevation is part of a ring segment of the rolling bearing cage that extends from a first axial web of the rolling bearing cage to a second axial web of the rolling bearing cage, wherein the ring segment, the first web and the second web bound the same pocket of the rolling bearing cage. In this case, a maximum axial length of extent of the ring segment at a point of the ring segment where the elevation is highest divided by a maximum axial length of extent of the ring segment deviates from 0.816 by a maximum of fifteen per cent, preferably by a maximum of ten per cent and particularly preferably by a maximum of five per cent. As a result, a higher degree of stability or strength than in known injection-moulded cages corresponding to the current prior art can be achieved. In particular, during production by injection moulding with a glass-fibre-reinforced plastic, an extended arrangement of a multiplicity of glass fibres can be achieved, which results in a high degree of stability.

In an advantageous refinement of the invention, the first end face has at least one wavy partial face, which is partially formed by a surface of the elevation and which is free from steps having a height, so that the height divided by a maximum axial length of extent of a ring segment of the rolling bearing cage having the elevation and extending between two axial webs of the rolling bearing cage bounding the same pocket of the rolling bearing cage is greater than 0.1724. This enables a stable construction to be achieved. In particular, during production by injection moulding with a glass-fibre-reinforced plastic, an extended arrangement of a multiplicity of glass fibres can be achieved, which results in a high degree of stability. In particular, in the event of production by injection moulding, uniform cooling after the injection moulding can be achieved.

In particular, the wavy partial face can have a plurality of wave crests and a plurality of wave troughs. In particular, the wavy partial face along a circumferential direction of the rolling bearing cage can extend over 360° about a central axis of the rolling bearing cage extending in the axial direction of the rolling bearing cage.

Furthermore, it is proposed that the rolling bearing cage has at least one boundary surface of a pocket of the rolling bearing cage that forms a complete boundary of the pocket with respect to an axial direction of the rolling bearing cage and that has a first and a second end with respect to a circumferential direction of the cage, wherein the boundary surface has a surface region which is spaced from the ends and protrudes further into the pocket in a direction opposite the axial direction than the two ends. This enables a long service life to be achieved. In particular, the effect can be achieved that the two ends of a rolling body moving in the pocket are not worn disproportionately during operation.

Advantageously, the rolling bearing cage has at least one pocket which is completely bounded by a boundary surface of the rolling bearing cage, wherein the boundary surface is free from steps having a height, so that the height divided by a maximum axial length of extent of a ring segment of the rolling bearing cage having the elevation and extending between two axial webs of the rolling bearing cage bounding the pocket is greater than 0.1724. This enables a stable construction to be achieved. In particular, during production by injection moulding with a glass-fibre-reinforced plastic, an extended arrangement of a multiplicity of glass fibres can be achieved, which results in a high degree of stability. In particular, in the event of production by injection moulding, slow cooling after the injection moulding can be achieved.

In particular, the boundary surface can be continuously differentiable in the mathematical sense.

In an advantageous refinement of the invention, the rolling bearing cage is at least partially made of glass-fibre-reinforced injection-moulded plastic or of aluminium. An "injection-moulded plastic" should be understood to mean in particular a plastic by means of which objects can be produced by injection moulding. This enables a high degree of stability at a low weight to be achieved.

In particular, the injection-moulded plastic can be polyamide or PEEK. In particular, the glass-fibre-reinforced injection-moulded plastic can have a glass fibre content of between 15 and 20 per cent by weight.

Furthermore, a method for producing a rolling bearing cage, in particular a rolling bearing cage as described above, is proposed, in which the rolling bearing cage is produced by injection moulding, wherein, when viewed in the circumferential direction of an injection mould of the rolling bearing cage, an injection is carried out at every second web of the rolling bearing cage. This makes it possible to achieve a high degree of efficiency. In particular, when glass-fibre-reinforced injection-moulded plastic is used during the injection moulding, the effect can be achieved that binding seams occur only at points of the rolling bearing cage that are subjected to a relatively low load.

In particular, the webs at which an injection is carried out can have a main direction of extent which is parallel to an axial direction of the rolling bearing cage.

Advantageously, the injection mould consists of at least three shaped parts, and a region of the rolling bearing cage that is produced by a first quantity of shaped parts has a smaller maximum diameter than those regions which are produced by those shaped parts which do not belong to the first quantity. It can thus be avoided that, by means of an offset of the first shaped part relative to the two other shaped parts, the first shaped part results in production of a cage region which protrudes radially in comparison to those regions which are produced by the two other shaped parts.

Further advantages emerge from the description below of the drawing. An exemplary embodiment of the invention is illustrated in the drawings. The drawings, the description and the claims contain numerous features in combination. A person skilled in the art will expediently also consider the features individually and put them together to form meaningful further combinations.
Fig. 1 shows a perspective view of a rolling bearing cage according to the invention,
Fig. 2 shows a further perspective view of the rolling bearing cage,
Fig. 3 shows a top view radially from the outside of part of the rolling bearing cage with a pocket,
Fig. 4 shows a section through the pocket with the alignment of the glass fibres, and

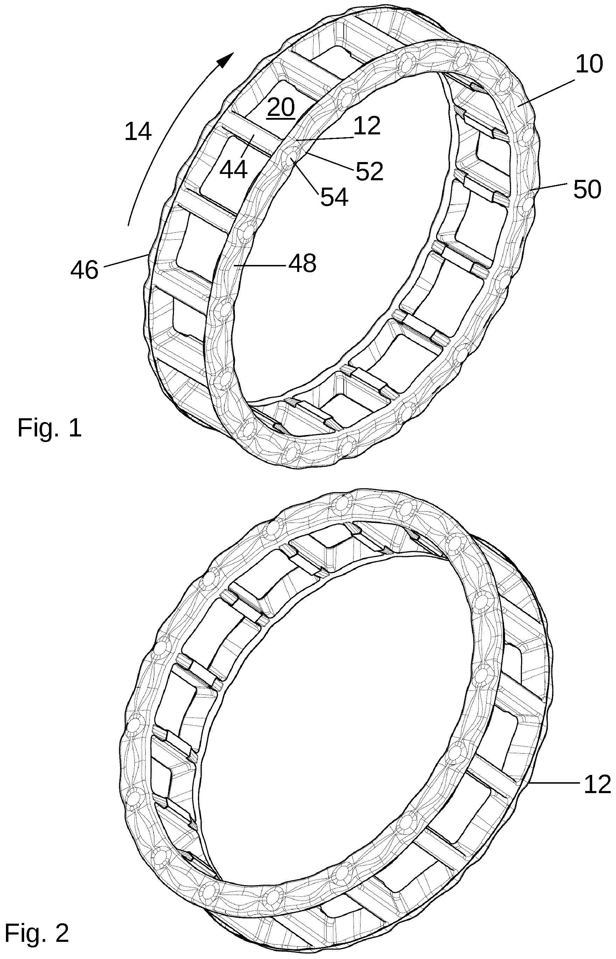

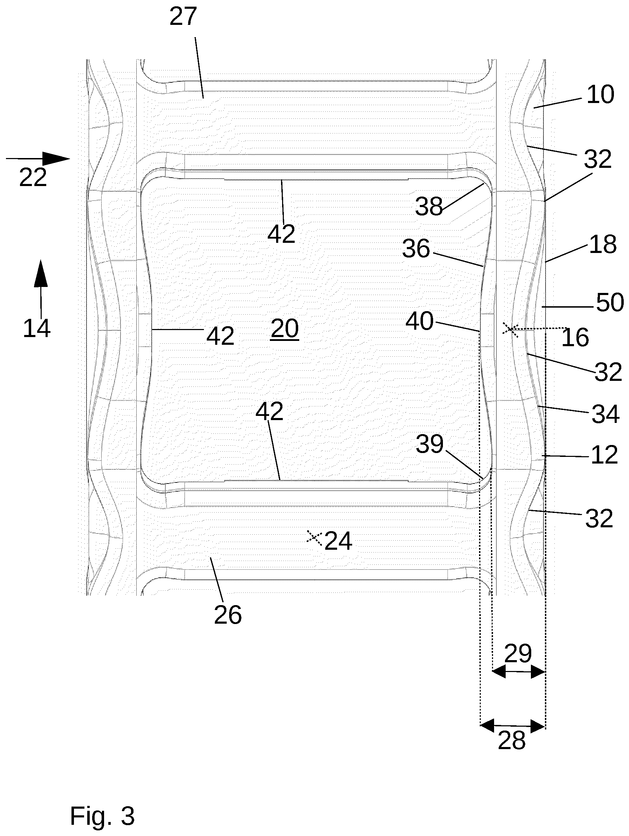

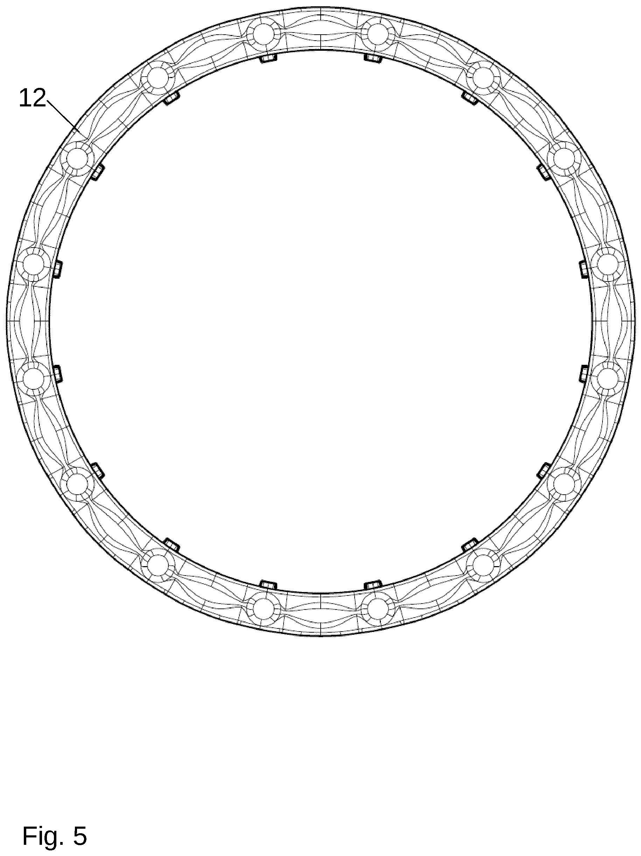

Fig. 5 shows a view of the rolling bearing cage in its axial direction. Figure 1 shows a rolling bearing cage according to the invention having a first end face 10 which has an elevation 12. The rolling bearing cage consists of three regions 44, 46, 48. The region 48 is annular and has the first end face 10. The region 46 is structurally identical to the region 48. The region 46 and the region 48 are connected by the region 44 and fastened to each other. The region 46 and the region 48, together with a first web 26 extending mainly in the axial direction 22 of the rolling bearing cage and a second web 27 extending mainly in the axial direction 22, bound a pocket 20 of the cage (Figures 1 and 3). The webs 26 and 27 are structurally identical. Furthermore, the region 44 consists of the webs 26 and 27 and further webs, which are structurally identical to the web 26. Furthermore, the region 44 has an even number of webs.

The elevation 12 differs from an individual step which has a right angle in one section. Furthermore, the elevation 12 along a circumferential direction 14 of the rolling bearing cage is free from steps that have a height, so that the height divided by a maximum axial length of extent 28 of a ring segment 18 of the rolling bearing cage having the elevation and extending only between the webs 26, 27 is greater than 0.1724. Furthermore, the elevation 12 is arranged with respect to the circumferential direction 14 between a centre of mass 16 of the ring segment 18 that bounds the pocket 20 with respect to the axial direction 22 and a centre of mass 24 of the web 26 that bounds the pocket with respect to the circumferential direction.

In addition, a maximum axial length of extent 29 of the ring segment at a point of the ring segment where the elevation is highest divided by a maximum axial length of extent 28 of the ring segment deviates from 0.816 by a maximum of fifteen per cent. The first end face 10 has at least one wavy partial face 32, which is partially formed by a surface 34 of the elevation 12 and which is free from steps having a height, so that the height divided by the maximum axial length of extent 28 of the ring segment 18 is greater than 0.1724. The wavy partial face 32 has a plurality of wave crests, one of which is the elevation 12, and a plurality of wave troughs along the circumferential direction 14 over the entire circumference of the rolling bearing cage. In the present case, the region 48 has two elevations per pocket, which are formed as per the elevation 12 or in a mirror-inverted manner with respect thereto. A further elevation 50 of the end face 10, which is arranged centrally on the end face 10 with respect to a radial direction of the rolling bearing cage, also extends over the entire circumference of the rolling bearing cage. The elevation 12 is arranged radially outside the elevation 50. A further elevation 52 of the end face 10 that has a slightly different height than the elevation 12 is arranged radially within the elevation 12 and the elevation 50. At each corner of a pocket of the cage, the end face has elevations which are structurally identical to the elevations 12 and 52 or are formed in a mirror-inverted manner with respect thereto. Furthermore, at each point at which a web meets an axial end face of the region 48 that is arranged opposite the end face 10, the end face 10 has an elevation 54 which has a circular outline in a top view of the end face 10. During production of the rolling bearing cage by injection moulding, pins are arranged adjacent to the locations of the elevations 54 by means of an injection mould, the pins ensuring venting during the injection moulding and permitting removal of the region 48 from the injection mould after the injection moulding.

The end face 10 is overall continuously differentiable in the mathematical sense.

The rolling bearing cage has a boundary surface 36 of the pocket 20 that forms a complete boundary of the pocket 20 with respect to the axial direction 22 of the rolling bearing cage and that has a first and a second end 38, 39 with respect to the circumferential direction 14 of the rolling bearing cage. The boundary surface 36 has a surface region 40 which is spaced from the ends and protrudes further into the pocket 20 in a direction opposite the axial direction than the two ends. Analogously thereto, central regions of the webs 26, 27 extend further into the pocket 20 than axial end regions of the webs 26, 27. Overall, this prevents contact between a rolling body located in the pocket during operation with the corners of the pocket, which extends the service life of the rolling bearing cage.

In addition, the rolling bearing cage has a boundary surface 42 which completely bounds the pocket 20. The boundary surface 36 and the surface region 40 are part of the boundary surface 42. The boundary surface 42 is free from edges, and thus continuously differentiable in the mathematical sense. In particular, the boundary surface 42 is thus free from steps.

The rolling bearing cage consists of glass-fibre-reinforced polyether ether ketone (PEEK for short). The glass fibre content is 5 to 80 per cent by weight, and advantageously 15-20 per cent by weight. Alternatively, the rolling bearing cage can be made of aluminium or other materials that can be used in the injection-moulding process.

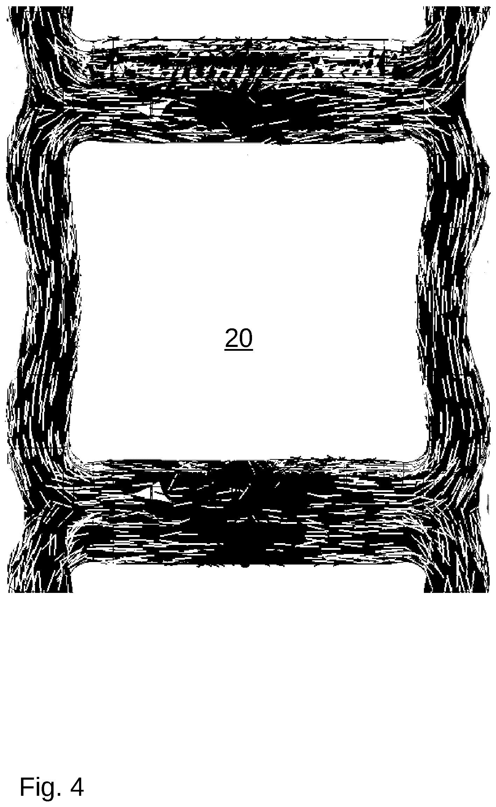

In a method for producing the rolling bearing cage, when viewed in the circumferential direction 14 of the rolling bearing cage and thus in the circumferential direction of the injection mould, an injection is carried out axially centrally simultaneously and with the same volumetric flow at every second web 26. This results in the formation of a binding seam axially in the centre of those webs at which no injection is carried out. This is expedient because a loading at the relevant points is comparatively low. A flat section through the pocket 20 is shown in Figure 4. The type and manner of the injection and the geometry of the rolling bearing cage achieve an improved flow with minimal turbulence and, in the finished state, the resulting alignment of the glass fibres (Figure 4) contributes to the robustness of the cages during operation. These regions with heavy loads are mainly the corners of the pockets of the cage. This is illustrated in Figure 4, with the glass fibres being shown in white. A high density of extended glass fibres also results in a high degree of stability.

The injection mould consists of at least three shaped parts. A region 44 of the rolling bearing cage that is produced by a first quantity of shaped parts has a smaller maximum diameter than those regions 46, 48 which are produced by those shaped parts which do not belong to the first quantity.

Figure 2 shows a further perspective view of the rolling bearing cage in which a second end face of the cage is visible. Furthermore, Figure 5 shows a view of the rolling bearing cage in the axial direction.

The rolling bearing cage is formed integrally and in one part. It has a low weight. Furthermore, it does not contain any materials that are harmful to the environment or to health.

Owing to its material and geometry, the rolling bearing cage has optimized frictional and wear behaviour. Furthermore, the cage only ages slowly in elevated temperatures, which is important because the service life of the cage is often very important for the service life of the bearing in which the cage is installed, since the cage fulfils two important functions, namely guiding and separating the rolling bodies. Owing to the lower friction during operation, comparatively little heat is generated during operation, and therefore even a lubricant in the bearing in which the cage is used also ages more slowly. Furthermore, the rolling bearing cage has a high degree of compatibility even with aggressive media. Examples of these aggressive media include acid gases, chlorine gas, sulphur gases, acids, bases and ammonia. In particular, the rolling bearing cage is therefore also readily usable in applications in gas-fired power plants. Furthermore, the cage has a comparatively low weight. The cage also meets high requirements with respect to high rotational speeds, durability and high strength. In addition, the cage can be produced efficiently.

The elevation 50 is a good reference for determining dimensions of the cage.

### List of reference signs:

| | |
|---|---|
| 10 | End face |
| 12 | Elevation |
| 14 | Circumferential direction |
| 16 | Centre of mass |
| 18 | Ring segment |
| 20 | Pocket |
| 22 | Axial direction |
| 24 | Centre of mass |
| 26 | Web |
| 27 | Web |
| 28 | Length of extent |
| 29 | Length of extent |
| 32 | Partial face |
| 34 | Surface |
| 36 | Boundary surface |
| 38 | End |
| 39 | End |
| 40 | Surface region |
| 42 | Boundary surface |
| 44 | Region |
| 46 | Region |
| 48 | Region |
| 50 | Elevation |
| 52 | Elevation |
| 54 | Elevation |

## Claims

1. Rolling bearing cage having at least a first end face (10),
**characterized in that**
the first end face has at least one elevation (12) which differs from an individual step which has a right angle in one section.

2. Rolling bearing cage according to Claim 1,
**characterized in that**
the elevation (12) is arranged with respect to a circumferential direction (14) of the rolling bearing cage between a centre of mass (16) of a ring segment (18) of the rolling bearing cage that precisely bounds a pocket (20) of the rolling bearing cage with respect to an axial direction (22) of the rolling bearing cage and a centre of mass (24) of a web (26) of the rolling bearing cage that bounds the pocket with respect to the circumferential direction.

3. Rolling bearing cage according to Claim 1 or Claim 2,
**characterized in that**
the elevation (12) along a circumferential direction (14) of the rolling bearing cage is free from steps that have a height, so that the height divided by a maximum axial length of extent (28) of a ring segment (18) of the rolling bearing cage having the elevation and extending between two axial webs (26, 27) of the rolling bearing cage that bound the same pocket (20) of the rolling bearing cage is greater than 0.1724.

4. Rolling bearing cage according to at least one of the preceding claims,
**characterized in that**
the elevation (12) is part of a ring segment (18) of the rolling bearing cage that extends from a first axial web (26) of the rolling bearing cage to a second axial web (27) of the rolling bearing cage, wherein the ring segment, the first web and the second web bound the same pocket (20) of the rolling bearing cage, and a maximum axial length of extent (29) of the ring segment at a point of the ring segment where the elevation is highest divided by a maximum axial length of extent (28) of the ring segment deviates from 0.816 by a maximum of fifteen per cent.

5. Rolling bearing cage according to at least one of the preceding claims,
**characterized in that**
the first end face (10) has at least one wavy partial face (32), which is partially formed by a surface (34) of the elevation (12) and which is free from steps having a height, so that the height divided by a maximum axial length of extent (28) of a ring segment (18) of the rolling bearing cage having the elevation and extending between two axial webs (26, 27) of the rolling bearing cage bounding the same pocket (20) of the rolling bearing cage is greater than 0.1724.

6. Rolling bearing cage according to at least one of the preceding claims,
**characterized by**
at least one boundary surface (36) of a pocket (20) of the rolling bearing cage that forms a complete boundary of the pocket with respect to an axial direction (22) of the rolling bearing cage and that has a first and a second end (38, 39) with respect to a circumferential direction (14) of the rolling bearing cage, wherein the boundary surface has a surface region (40) which is spaced from the ends and protrudes further into the pocket in a direction opposite the axial direction than the two ends.

7. Rolling bearing cage according to one of the preceding claims,
**characterized by**
at least one pocket (20) which is completely bounded by a boundary surface (42) of the rolling bearing cage, wherein the boundary surface is free from steps having a height, so that the height divided by a maximum axial length of extent (28) of a ring segment (18) of the rolling bearing cage having the elevation and extending between two axial webs (26, 27) of the rolling bearing cage bounding the pocket is greater than 0.1724.

8. Rolling bearing cage according to one of the preceding claims,
**characterized in that**
the rolling bearing cage is at least partially made of glass-fibre-reinforced injection-moulded plastic or of aluminium.

9. Method for producing a rolling bearing cage, in particular a rolling bearing cage according to at least one of Claims 1 to 8, in which the rolling bearing cage is produced by injection moulding, wherein, when viewed in the circumferential direction (14) of an injection mould of the rolling bearing cage, an injection is carried out at every second web (26) of the rolling bearing cage.

10. Method according to Claim 9,
**characterized in that**
the injection mould consists of at least three shaped parts, and a region (44) of the rolling bearing cage that is produced by a first quantity of shaped parts has a smaller maximum diameter than those regions (46, 48) which are produced by those shaped parts which do not belong to the first quantity.
